# FASCICULE DE BREVET EUROPEEN

(11) **EP 0 890 778 B1**
(45) Date de publication et mention de la délivrance du brevet: **11.12.2002**
(21) Numéro de dépôt: 98401699.8
(22) Date de dépôt: 06.07.1998
(51) Int. Cl.: F16L 55/033

(54) **Bague fendue en caoutchouc ou analogue pour le montage d'une patte de fixation sur un tube rigide**
Geschlitzte Hülse aus Kautschuk oder ähnlichem Material zum Verbinden einer Befestigungslasche an ein starres Rohr
Split sleeve of rubber or similar material for mounting a fastening tab to a rigid pipe

(30) Priorité: 11.07.1997 FR 9708856
(43) Date de publication de la demande: 13.01.1999
(73) Titulaire: HUTCHINSON, 75008 Paris (FR)
(72) Inventeur: Drouet, Philippe, 45200 Amilly (FR); Bataille, Patrick, 21110 Rouvres-en-Plaine (FR)
(74) Mandataire: Ramey, Daniel

(56) Documents cités:
- DE-A- 3 025 601
- DE-U- 6 935 864
- FR-A- 2 457 403
- GB-A- 2 230 837
- US-A- 4 185 802

## Description

L'invention concerne une bague fendue en une matière élastiquement déformable telle que du caoutchouc ou analogue pour le montage d'une patte de fixation sur un tube rigide, tel qu'un tube métallique par exemple.

De telles bagues sont utilisées notamment pour le montage des tubes rigides de transfert de fluide dans un compartiment moteur de véhicule automobile, au moyen de pattes de fixation comprenant une partie recourbée que l'on peut serrer sur la bague de caoutchouc montée sur le tube rigide.

Ce serrage se traduit par une compression de la bague sur le tube mais ne suffit pas à immobiliser la bague en rotation et en translation sur le tube. Pour garantir une position et une orientation angulaire déterminées de la patte de fixation sur le tube, il faut coller la bague sur le tube dans la position voulue au moyen d'un adhésif approprié.

L'emploi d'un adhésif sur une chaîne de montage de pièces pour véhicules automobiles est très contraignant et coûteux, les adhésifs étant souvent des produits toxiques ou qu'il faut manipuler avec précaution, et qu'il faut de plus doser avec soin pour éviter les bavures, les traces d'adhésif, etc.

Le Modèle d'Utilité allemand DE-69 35 864 U concerne une bague fendue selon le préambule de la revendication 1. Cette bague présente sur sa face interne un réseau de nervures pyramidales apte à procurer un contact ponctuel propice à un découplage du bruit. Elle ne permet pas de résoudre le problème d'une immobilisation dans une position angulaire déterminée.

L'invention a pour but d'éviter ces inconvénients et d'apporter une solution simple, efficace et peu coûteuse au problème de l'immobilisation en translation et en rotation d'une patte de fixation montée sur un tube par l'intermédiaire d'une bague en caoutchouc ou analogue.

Elle propose, à cet effet, une bague fendue du type précité, telle que définie dans la revendication 1.

La présence des nervures en saillie sur la surface interne de la bague est très favorable à l'immobilisation de la bague sur le tube car les flancs des nervures s'appliquent sur le tube au serrage et augmentent de ce fait la surface de contact entre la bague et le tube et donc le frottement de la bague sur le tube.

De plus le croisement des nervures assure une immobilisation parfaite de la bague sur le tube, aussi bien en translation qu'en rotation.

Dans un mode de réalisation préféré de l'invention, les nervures sont formées par un filetage à pas à gauche et un filetage à pas à droite sur la surface interne de la bague, ces deux filetages étant de préférence de même pas et superposés.

L'invention concerne également un dispositif de fixation d'un tube rigide sur un support au moyen d'une bague fendue et d'une patte de fixation dont une partie serre la bague sur le tube, ce dispositif étant caractérisé en ce que la bague est du type décrit dans ce qui précède.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique de face avec arrachement partiel d'une bague selon l'invention ;
- la figure 2 est une vue schématique de côté de cette bague ;
- la figure 3 est une vue schématique en perspective éclatée d'un dispositif de fixation selon l'invention.

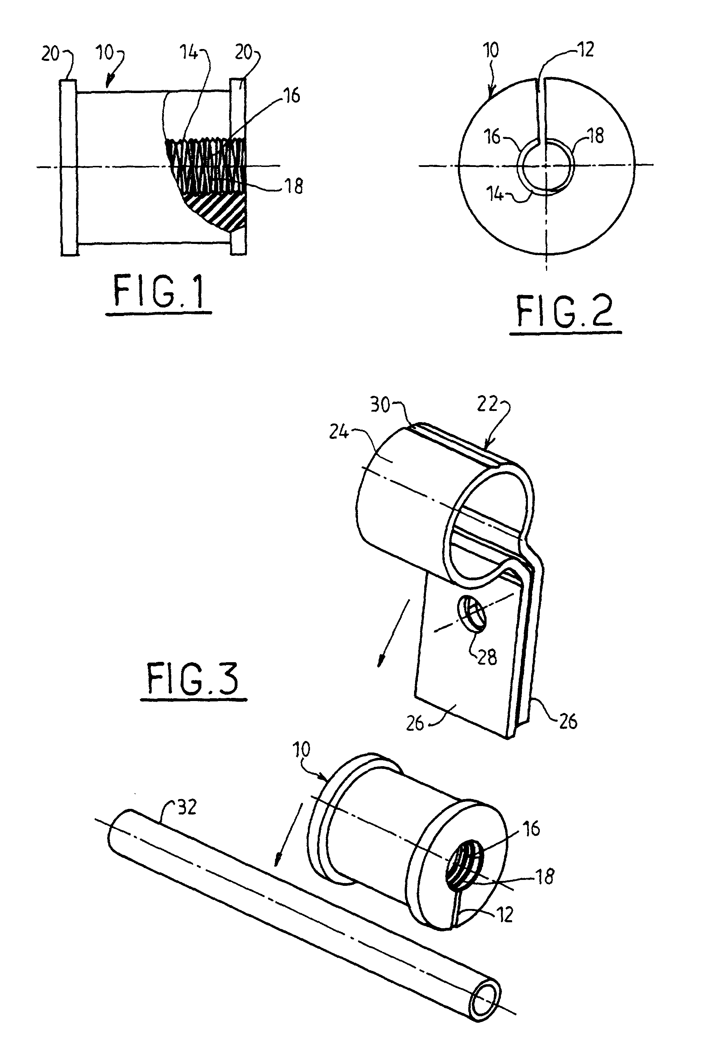

La bague représentée schématiquement aux figures 1 et 2 est réalisée en une matière élastiquement déformable telle que du caoutchouc ou un élastomère, et est fendue radialement en 12 sur toute sa longueur pour pouvoir être posée plus commodément sur un tube tel que celui représenté en figure 3.

La surface cylindrique interne 14 de la bague 10 est formée avec un double filetage 16, 18, ces deux filetages étant superposés et de même pas mais de sens opposés, de celle sorte qu'ils forment une série de nervures en losanges très allongés sur la surface interne 14 de la bague 10.

Dans le mode de réalisation représenté, la bague 10 comporte deux rebords annulaires 20 à ses extrémités, pour faciliter le positionnement d'une patte de fixation telle que celle représentée en 22 en figure 3.

Cette patte de fixation 22 comprend une partie cylindrique 24 ouverte le long d'une génératrice et raccordée à deux oreilles 26 plates destinées à être appliquées l'une sur l'autre pour le serrage de la patte 22 sur la bague 10 et pour la fixation de l'ensemble sur un support au moyen d'une vis passant dans deux trous alignés 28 des oreilles 26.

Cette patte 22 est réalisée en métal et comporte une rainure longitudinale 30 facilitant son serrage sur la bague 10.

Ce dispositif est utilisé de la façon suivante :

On commence par poser la bague 10 sur un tube rigide 32 tel qu'un tube métallique (par exemple un tube d'un circuit de direction assistée), la bague 10 ayant un diamètre interne nominal légèrement inférieur au diamètre externe du tube 32, puis on amène sur la bague 10 la patte 22 dont les oreilles 26 ont été suffisamment écartées l'une de l'autre, et on serre la partie cylindrique 24 de la patte 22 sur la bague 10 en rapprochant les deux oreilles 26 l'une de l'autre.

Le diamètre interne de la partie cylindrique 24 de la patte 22 est sensiblement égal au diamètre de la partie cylindrique externe de la bague 10, entre les rebords d'extrémités 20, pour appliquer à pression, sur la surface du tube 32, les nervures formées par les filetages 16 et 18 de la surface interne de la bague 10.

Par exemple, pour un tube 32 ayant un diamètre externe de 8 mm, on utilisera une bague 10 fendue ayant un diamètre interne de 7,5 mm, le diamètre externe de la bague étant de 20 mm.

Le serrage de la bague 10 sur le tube 32 se traduit par une immobilisation complète de la bague 10 en translation et en rotation, ce qui garantit la position axiale et l'orientation angulaire de la patte de fixation 22 sur le tube 32.

On évite ainsi, de façon simple et peu coûteuse, tous les inconvénients liés au collage des bagues en caoutchouc sur les tubes métalliques ou aux brasures des pattes de fixation sur les tubes.

L'invention s'applique, de façon générale, à la fixation de tubes rigides de transfert de fluide, en particulier dans des véhicules automobiles.

## Revendications

1. Bague fendue en une matière élastiquement déformable telle que du caoutchouc ou analogue pour le montage d'une patte de fixation (22) sur un tube rigide (32), et qui comprend sur sa surface interne (14) un réseau de nervures en saillie, **caractérisée en ce que** ces nervures (16, 18) se croisent entre elles, ces nervures permettant, quand la bague (10) est serrée sur le tube (32) par serrage de la patte de fixation (22), de l'immobiliser en translation et en rotation sur le tube, les flancs des nervures (16, 18) s'appliquant sur le tube en augmentant la surface de contact entre la bague et le tube (32).

2. Bague selon la revendication 1, **caractérisée en ce que** les nervures (16, 18) forment entre elles des losanges allongés.

3. Bague selon l'une des revendications précédentes, **caractérisée en ce que** les nervures sont formées par filetage sur la surface interne de la bague (10).

4. Bague selon l'une des revendications précédentes, **caractérisée en ce que** les nervures sont formées par deux filetages (16, 18) de sens opposés sur la surface interne de la bague.

5. Bague selon la revendication 4, **caractérisée en ce que** les deux filetages sont de même pas.

6. Bague selon la revendication 3 ou 4, **caractérisée en ce que** les deux filetages sont superposés.

7. Dispositif de fixation d'un tube rigide sur un support au moyen d'une bague fendue et d'une patte de fixation (22) dont une partie (24) serre la bague (10) sur le tube, **caractérisé en ce que** la bague est du type selon l'une des revendications précédentes.

8. Dispositif de selon la revendication 7, **caractérisé en ce que** la bague fendue (10) a un diamètre interne nominal légèrement inférieur au diamètre externe du tube (32).

## Patentansprüche

1. Geschlitzte Hülse aus einem elastischen, verformbaren Material, wie z.B. aus Kautschuk oder ähnlichem, zur Montage einer Befestigungslasche (22) an einem starren Rohr (32), die an ihrer Innenfläche (14) ein Netz an vorspringenden Rippen aufweist, **dadurch gekennzeichnet, daß** sich die Rippen (16, 18) untereinander kreuzen, wobei die Rippen, wenn die Hülse (10) auf das Rohr (32) durch Andrücken der Befestigungslasche (22) gedrückt ist, ermöglichen, daß diese bezüglich Translation und Rotation auf dem Rohr unbeweglich gemacht ist, wobei die Flanken der Rippen (16, 18) auf das Rohr aufgebracht werden, indem die Kontaktfläche zwischen der Hülse und dem Rohr (32) vergrößert wird.

2. Hülse nach Anspruch 1, **dadurch gekennzeichnet, daß** die Rippen (16, 18) miteinander längliche Rhomben bilden.

3. Hülse nach einem der vorhergehenden Ansprüche, **dadurch gekennzeichnet, daß** die Rippen durch Gewinde auf der Innenfläche der Hülse (10) ausgebildet sind.

4. Hülse nach einem der vorhergehenden Ansprüche, **dadurch gekennzeichnet, daß** die Rippen durch zwei Gewinde (16, 18) mit entgegengesetzten Richtungen auf der Innenfläche der Hülse ausgebildet sind.

5. Hülse nach Anspruch 4, **dadurch gekennzeichnet, daß** die zwei Gewinde die gleiche Steigung haben.

6. Hülse nach Anspruch 3 oder 4, **dadurch gekennzeichnet, daß** die zwei Gewinde übereinander liegen.

7. Vorrichtung zum Befestigungen eines starren Rohres an einer Stütze mittels einer geschlitzten Hülse und einer Befestigungslasche (22), wobei ein Teil (24) von dieser die Hülse (10) auf das Rohr drückt, **dadurch gekennzeichnet, daß** die Hülse von dem Typ nach einem der vorhergehenden Ansprüche ist.

8. Vorrichtung nach Anspruch 7, **dadurch gekennzeichnet, daß** die geschlitzte Hülse (10) einen inneren Nenndurchmesser hat, der geringfügig kleiner als der Außendurchmesser des Rohres (32) ist.

## Claims

1. A split sleeve made of a resiliently deformable material such as rubber or the like for assembling a fixing bracket (22) on a rigid tube (32), which sleeve comprises a lattice of projecting ribs on its inside surface (14), said sleeve being **characterized in that** the ribs are crisscrossed, said ribs, when clamped on the tube (32) by clamping the fixing bracket (22), preventing the sleeve (10) from moving relative to the tube, both in translation and in rotation, the flanks of the ribs (16, 18) being pressed against the tube, thereby increasing the contact area between the sleeve and the tube (32).

2. A sleeve according to claim 1, **characterized in that** the ribs (16, 18) form long lozenges between one another.

3. A sleeve according to any preceding claim, **characterized in that** the ribs form threading on the inside surface of the sleeve (10).

4. A sleeve according to any preceding claim, **characterized in that** the ribs form two oppositely-handed threads (16, 18) on the inside surface of the sleeve.

5. A sleeve according to claim 4, **characterized in that** both threads have the same pitch.

6. A sleeve according to claim 3 or 4, **characterized in that** the threads are superposed.

7. A fixing device for fixing a rigid tube on a support by means of a split sleeve, and a fixing bracket (22) having a portion (24) which clamps the sleeve (10) onto the tube, said device being **characterized in that** the sleeve is of the type according to any preceding claim.

8. A fixing device according to claim 7, **characterized in that** the split sleeve (10) has a nominal inside diameter that is slightly smaller than the outside diameter of the tube (32).
